# EUROPÄISCHE PATENTSCHRIFT

(11) **EP 1 033 237 B1**
(45) Veröffentlichungstag und Bekanntmachung des Hinweises auf die Patenterteilung: **07.07.2004**
(21) Anmeldenummer: 99104248.2
(22) Anmeldetag: 03.03.1999
(51) Int. Cl.: B30B 15/06, B32B 5/26

(54) **Presspolster**
Press pad
Coussinet pour presse

(43) Veröffentlichungstag der Anmeldung: 06.09.2000
(73) Patentinhaber: Thomas Josef Heimbach Gesellschaft mit beschränkter Haftung & Co., D-52353 Düren (DE)
(72) Erfinder: Best, Walter, Dr., 52351 Düren (DE); Kaldenhoff, Ralf, Dr., 52072 Aachen (DE)
(74) Vertreter: Paul, Dieter-Alfred, Dipl.-Ing.

(56) Entgegenhaltungen:
- EP-A- 0 361 796
- DE-A- 2 319 593
- DE-A- 2 344 248
- DE-A- 2 627 442
- DE-A- 19 521 946
- DE-U- 29 518 204
- DE-U- 29 721 494
- DE-U- 29 721 495
- US-A- 5 370 760

## Beschreibung

Die Erfindung betrifft ein Preßpolster für den Einsatz in Laminierpressen mit einer in Dickenrichtung elastischen Polsterung und mit zwischen den Oberflächen des Preßpolsters hin- und hergehenden Verbindungsfäden, die wenigstens teilweise als Wärmeleitfäden ausgebildet sind, deren Wärmleitfähigkeit besser ist als die der Polsterung.

Die Herstellung von Schichtmaterialien, beispielsweise dekorativ beschichteten Spanplatten, erfolgt in Laminierpressen, die als Nieder- oder Hochdrucketagenpressen oder Kurztaktpressen ausgebildet sein können. Damit der Druck der Preßplatten vollflächig und gleichmäßig auf das Preßgut übertragen wird, werden zwischen dem Preßgut und den Preßplatten Preßpolster eingelegt. Die Preßpolster müssen hohen Drücken und auch den in solchen Pressen auftretenden Temperaturen standhalten können, und sie müssen in der Lage sein, die von den Preßplatten ausgehende Wärme schnell und ohne große Verluste auf das Preßgut überzuleiten. Außerdem ist es erwünscht, mit einem Preßpolster hintereinander Preßgut verschiedenen Formates zu verarbeiten.

Die bekannten Preßpolster lassen sich im wesentlichen in zwei Gruppen einteilen. Bei der einen Gruppe handelt es sich um Schichtkonstruktionen. So beschreibt die DE-A-26 27 442 ein Preßpolster, bei dem ein Wirrfaservlies beidseitig mit einem Silikonelastomer beschichtet ist. In der EP-A-0 235 582 ist ein Preßpolster offenbart, bei dem eine Silikonelastomerfolie beidseits mit einer Trennfolie belegt ist. Die US-A-3 723 220 offenbart ein Preßpolster aus einer Silikonfolie, die zusätzlich mit einer Trennfolie versehen sein kann.

Zu dieser Gruppe von Preßpolstern gehören auch die Preßpolster nach der DE-A-2 230 220 und DE-A-23 44 248. Die darin offenbarten Preßpolster bestehen aus einer oder mehreren Lagen eines komprimierbaren Metallfaservlieses, wobei zur Erhöhung der mechanischen Festigkeit und im Falle der Mehrlagigkeit zur Verbindung der einzelnen Lagen Steppnähte vorgesehen sind oder die Verbindung durch Nadelung hergestellt werden kann. Da diese Preßpolster praktisch vollständig aus Metall bestehen, haben sie eine hohe Wärmeleitfähigkeit in Dickenrichtung, die nicht immer erwünscht ist und die nur in ganz engen Grenzen variiert werden kann. Ferner besteht die Gefahr, daß durch die Metallfasern Markierungen in das Preßgut eingeprägt werden. Außerdem haben Metallfaservliese auf Dauer nur eine begrenzte Rückfederung.

Preßpolster, die aus einem Gewebe bestehen oder es enthalten, sind in vielfältigen Ausführungsformen bekannt, insbesondere was die dabei verwendeten Materialien angeht. Die DE-B-23 19 593 offenbart ein Preßpolster, dessen Basis ein Metallsiebgewebe ist, das in einer Matrix aus einem Silikonelastomer eingeschlossen ist. Das Preßpolster gemäß der DE-A-23 38 749 weist ein Glasfasergewebe auf, bei dem einzelne oder sämtliche Fäden mit einem Kunststoff, beispielsweise einem Silikonelastomer, imprägniert oder beschichtet sind, so daß diese Fäden die Polsterung bilden. Entsprechendes ist der DE-A-26 50 642 zu entnehmen. In der EP-A-0 493 630 wird ein Preßpolster aus einem textilen Gewebe vorgeschlagen, bei dem das Gewebe aus aromatischen Polyamidfäden und Metallfäden als Wärmeleitfäden zusammengesetzt ist. Das DE-U-295 18 204 offenbart ein Preßpolster, bei dem ein Anteil der Fäden ein Silikonelastomer aufweist und ein weiterer Anteil als Metalldraht ausgebildet sein kann. Das DE-U-94 18 984.6 beschreibt ein Preßpolster, bei dem die Fäden aus verschiedensten Materialien, insbesondere aus Gummi, Silikonelastomer oder Metall sowie Kombinationen davon bestehen können. Schließlich sind in den DE-U-297 21 495 und DE-U-297 21 494 Preßpolster aus einem Gewebe dargestellt, bei denen die einzelnen Fäden in besonderer Weise verwebt und ausgebildet sind.

Bei der ersten Gruppe von Preßpolstern ist mit Ausnahme der aus Metallfaservlies bestehenden Preßpolster eine befriedigende Wärmeleitfähigkeit nicht erreichbar. Bei der zweiten Gruppe von Preßpolstern müssen Kompromisse zwischen Wärmeleitfähigkeit und Dimensionsstabilität getroffen werden, so daß nicht immer ein optimales Ergebnis bezüglich dieser Eigenschaften erreichbar ist.

Der Erfindung liegt somit die Aufgabe zugrunde, ein Preßpolster so zu gestalten, daß sich die Wärmeleitfähigkeit und die Dimensionsstabilität in weiten Bereichen einstellen läßt und daß auch bezüglich der Polsterung ein breiter Bereich an variationsmöglichkeiten für eine anforderungsgerechte Auslegung des Preßpolsters gegeben ist.

Diese Aufgabe wird erfindungsgemäß dadurch gelöst, daß Verbindungsfäden vorgesehen sind, die Nahtverlauf haben oder zwischen den Oberflächen Maschen bilden, wobei die naht- oder maschenbildenden verbindungsfäden wenigstens teilweise als Wärmeleitfäden ausgebildet sind, die die Wärmeleitfähigkeit des Preßpolsters in Dickenrichtung verbessern. Grundgedanke der Erfindung ist es also, wenigstens einen Teil der Verbindungsfäden, vorzugsweise sämtliche Verbindungsfäden nicht mit der Polsterung zu verweben, sondern die Verbindung durch Nähen - hierunter ist auch Steppen oder Sticken zu verstehen -, Wirken oder Stricken herzustellen und hierfür zumindest teilweise ein Material zu verwenden, durch das die Wärmeleitfähigkeit des Preßpolsters in Dickenrichtung verbessert wird. Es hat sich gezeigt, daß hierdurch eine feste Gesamtstruktur mit hoher Dimensionsstabilität erreichbar ist. Durch den Anteil der wärmeleitfäden an den Verbindungsfäden - die Verbindungsfäden können auch sämtlich als Wärmeleitfäden ausgebildet sein - sowie durch Auswahl und Anzahl der Naht- bzw. Maschenbildung läßt sich die Wärmeleitfähigkeit in weiten Bereichen den jeweiligen Anforderungen anpassen. Außerdem entsteht eine größere Freiheit bezüglich der Ausbildung der Polsterung. Sofern neben den erfindungsgemäßen naht- oder maschenbildenden verbindungsfäden weitere Verbindungsfäden vorhanden sind, können diese Fäden ebenfalls ganz oder teilweise als Wärmeleitfäden ausgebildet sein. Infolge dessen wird eine Struktur für das Preßpolster bereitgestellt, die eine wesentlich größere Variationsbreite bezüglich der vorgenannten Eigenschaften anbietet, als dies mit den vorbekannten Gewebekonstruktionen erreichbar gewesen ist.

Die Polsterung kann als einlagige Polsterschicht ausgebildet sein. Es besteht jedoch auch die Möglichkeit, die Polsterung mehrlagig auszubilden und wenigstens eine der Lagen in Dickenrichtung elastisch auszubilden, wobei alle Lagen durch Verbindungsfäden miteinander verbunden sind.

In Sonderheit kann die elastische Lage bzw. wenigstens eine der elastischen Lagen in Dickenrichtung elastische Polsterfäden aufweisen oder daraus bestehen.

In Ausbildung dieses Grundgedankens können die Polsterfäden in der jeweiligen Lage nebeneinander in derselben Richtung verlaufen, wobei die Polsterfäden als Gelege vorliegen oder Teil eines Gewebes oder einer Maschenware sein können. Dabei können auch mehrere Lagen mit Polsterfäden übereinander angeordnet werden. In diesem Fall ist es zweckmäßig, wenn die Polsterfäden der Lagen sich in unterschiedlichen Richtungen erstrecken, beispielsweise diagonal, quer oder längs, so daß sie sich kreuzen.

Die Polsterfäden können beispielsweise aus einem gummielastischen Material, wie Silikonelastomer oder Fluorsilikonelastomer, bestehen. Sie können jedoch in an sich bekannter Weise auch so aufgebaut sein, daß sie jeweils einen Seelenfaden beispielsweise aus Metalldraht aufweisen, der von einem gummielastischen Fadenmaterial, beispielsweise Silikonelastomer, umgeben ist. Zusätzlich können die Polsterfäden zumindest teilweise auch von Metalldraht umgeben sein, beispielsweise in geflochtener, gewickelter oder verseilter Form, wie dies beispielsweise dem DE-U-295 18 204 und dem DE-U-297 21 495 zu entnehmen ist. Der gummielastische Fadenmantel kann beispielsweise auch von gummielastischen Fäden gebildet sein, die um den Seelenfaden gewickelt oder verseilt sind.

Anstatt oder in Kombination mit Polsterfäden kann die elastische Lage bzw. wenigstens eine der elastischen Lagen auch aus einer Elastomerfolie bestehen. Die Folie kann mit die Wärmeleitfähigkeit verbessernden Elementen, beispielsweise Pulvern, Fäden oder Fasern aus Metall wie Aluminium, Bronze, Edelstahl, Kupfer oder Messing versehen sein. Zur Verstärkung kann die Elastomerfolie auch einen textilen Träger enthalten, der als Gewebe, Fadengelege, Gewirke oder Gestricke vorliegen kann.

Daneben kann die elastische Lage bzw. wenigstens eine der elastischen Lagen auch als ein elastisches Gewebe, Gewirke, Gestricke oder auch als ein Faservlies oder eine Kombination der vorgenannten Textilien ausgebildet sein.

Die elastische Lage bzw. wenigstens eine der elastischen Lagen kann aber auch aus Schaumstoff bestehen, wobei der Schaumstoff die Wärmeleitfähigkeit verbessernde Elemente enthalten kann. Eine andere Möglichkeit besteht darin, eine Vlieslage vorzusehen, wobei die Vlieslage zur Verbesserung der Wärmeleitfähigkeit Metallfasern aufweisen kann. Statt dessen oder in Kombination kann aber auch eine Gewebe, Fadengelege oder eine Maschenware vorgesehen sein, wobei die jeweilige Lage teilweise oder ganz aus Metallfäden besteht. Auch Kombinationen der vorgenannten Lagen sind möglich, beispielsweise eine Kombination aus Gewebe, Fadengelege oder Maschenware mit einer Vlieslage.

Soweit das Preßpolster mehrlagig ausgebildet ist, kann es auch zweckmäßig sein, wenn wenigstens eine der Lagen inkompressibel ausgebildet ist, beispielsweise als Metallfolie oder aus Folienbändchen bestehend.

Was die Wärmeleitfäden angeht, kommen gut wärmeleitfähige Metalle, wie beispielsweise Aluminium, Bronze, Edelstahl, Kupfer oder Messing in Frage. Die Wärmeleitfäden können dabei als Drähte, Seile oder Litzen vollständig aus diesen Metallen bestehen oder solche durchgehend enthalten. Dabei besteht die Möglichkeit, die Wärmeleitfäden als Kunststoffäden, beispielsweise aus hochfesten Kunststoffen wie Aramid oder Polyimid, mit einem Anteil Metall auszubilden.

Ferner ist gemäß der Erfindung vorgesehen, daß sich Wärmeleitfäden und Nicht-Wärmeleitfäden als Bindungsfäden abwechseln, wobei die Nicht-Wärmeleitfäden eine höhere Zugfestigkeit haben als die Wärmeleitfäden, beispielsweise aus Aramid oder Polyimid bestehen.

Die Erfindung sieht schlußendlich vor, daß das Preßpolster Randverdickungen aufweist, was durch den Einsatz zusätzlicher Fäden, Bänder oder durch Schlaufenbildung am Rand erreicht werden kann. Auch ein Umklappen der Ränder mit nachfolgendem Vernähen führt zu solchen Randverdickungen. Hierdurch wird eine Druckvergleichmäßigung bis in die Randbereiche hinein bewirkt.

In der Zeichnung ist die Erfindung anhand von Ausführungsbeispielen näher veranschaulicht. Es zeigen:
- Figur 1: die Schrägansicht eines Teils eines einlagigen Preßpolsters bei der Herstellung;
- Figur 2: die Schrägansicht eines Teils eines mehrlagigen Preßpolsters bei der Herstellung, wobei die einzelnen Lagen der Polsterung gestuft dargestellt sind;
- Figur 3: die Seitenansicht eines Polsterfadens;
- Figur 4: einen Schnitt durch den Polsterfaden gemäß Figur 3;
- Figuren 5 bis 7: Preßpolster mit verschiedenen Randverdickungen.

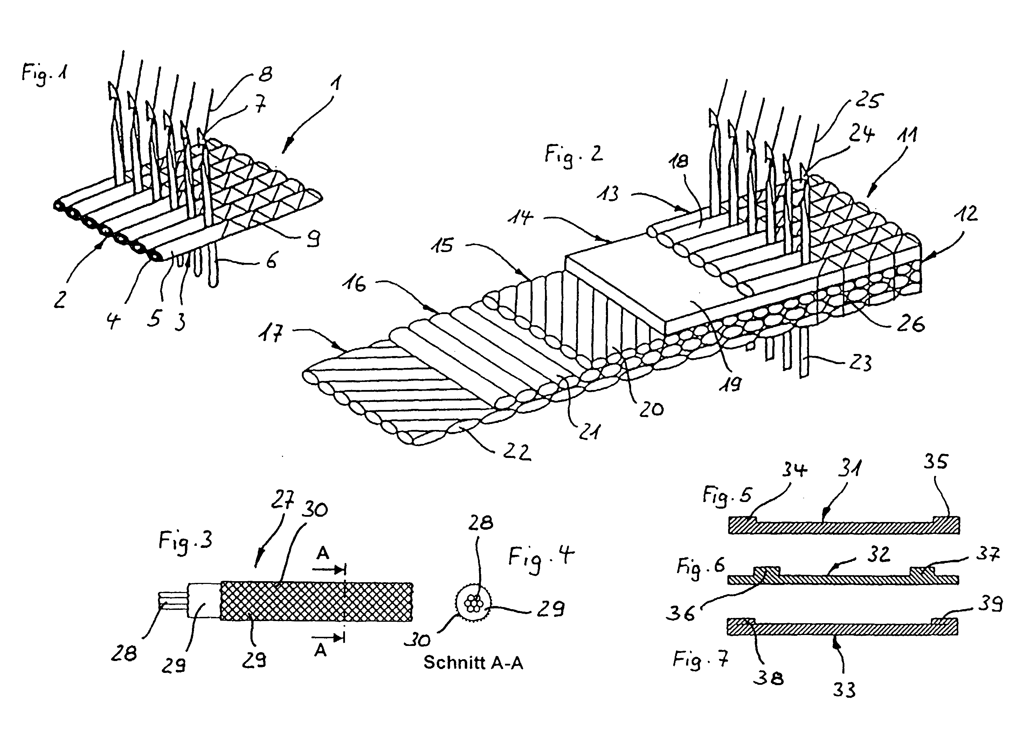

Das in Figur 1 teilweise dargestellte Preßpolster 1 weist eine Polsterschicht 2 auf, welche einlagig ausgebildet ist und aus einer Vielzahl nebeneinander und parallel verlaufender Polsterfäden - beispielhaft mit 3 bezeichnet - besteht. Die Polsterfäden 3 haben einen Seelenfaden - beispielhaft mit 4 bezeichnet -, der als Metallitze ausgebildet ist und von einem Fadenmantel - beispielhaft mit 5 bezeichnet - aus einem gummielastischen Material, beispielsweise einem Silikonelastomer, umgeben ist.

Zwischen den Polsterfäden 3 ragen jeweils Nadeln - beispielhaft mit 6 bezeichnet - einer ansonsten nicht näher dargestellten, konventionellen Wirkmaschine hoch. Die Nadeln 6 weisen obenseitig Haken - beispielhaft mit 7 bezeichnet - auf, die Verbindungsfäden - beispielhaft mit 8 bezeichnet - einfassen. Durch senkrechte Bewegung der Nadeln 6 werden um die Polsterfäden 3 Maschen - beispielhaft mit 9 bezeichnet - eines Kettengewirkes gebildet. Die Polsterfäden 3 durchdringen also die Maschen 9 des Kettengewirkes, wobei das Kettengewirke die Polsterfäden 3 in der gezeigten Lage hält, d.h. sie fest miteinander in einer definierten Position hält.

Die Verbindungsfäden 8 sind als Metalldrähte ausgebildet. Ein Teil der Verbindungsfäden 8 kann jedoch auch aus einem Fadenmaterial hoher Festigkeit, wie beispielsweise Aramid oder Polyimid, bestehen, oder diese Materialien können mit Metallfäden in einem Fadensystem kombiniert sein. Die Verbindungsfäden 8 sorgen für eine gute Wärmeleitfähigkeit des Preßpolsters 1, so daß die von den Preßplatten ausgehende Wärme schnell und weitgehend verlustlos auf das Preßgut übertragen wird. Gleichzeitig sorgen die Polsterfäden 3 für eine hohe Elastizität in Dickenrichtung des Preßpolsters 1 und passen sich damit dem Preßgut anschmiegsam an.

Das in Figur 2 dargestellte Preßpolster 11 unterscheidet sich von dem Preßpolster 1 gemäß Figur 1 durch eine mehrlagig aufgebaute Polsterschicht 12. Diese Polsterschicht besteht aus insgesamt fünf Lagen 13, 14, 15, 16, 17. Die obere Lage 13 hat sich in Längsrichtung erstreckend, parallel zueinander verlaufende Polsterfäden - beispielhaft mit 18 bezeichnet -, die gleich ausgebildet sind wie die Polsterfäden 3 bei dem Preßpolster 1 gemäß Figur 1. Die Lage 14 wird von einer elastischen Silikonelastomerfolie 19 gebildet. Die darunterliegende Lage 15 besteht aus einem Fadengelege aus Polsterfäden - beispielhaft mit 20 bezeichnet -, wobei die Polsterfäden 20 den Polsterfäden 18 in der Lage 13 entsprechen, nur daß sie schräg zur Längsrichtung des Preßpolsters 11 verlaufen. Die wiederum darunterliegende Lage 16 besteht aus einem Fadengelege aus Polsterfäden - beispielhaft mit 21 bezeichnet -, welche quer zu den Polsterfäden 18 der Lage 13 verlaufen, ansonsten jedoch gleich ausgebildet sind. Schließlich wird die untere Lage 17 von einem Fadengelege aus Polsterfäden - beispielhaft mit 22 bezeichnet - gebildet, welche schräg zur Längsrichtung des Preßpolsters 1 verlaufen, jedoch in einer anderen Richtung als in der Lage 15.

Ansonsten haben auch diese Polsterfäden 22 den gleichen Aufbau wie die Polsterfäden 18 in der obersten Lage 13. Es versteht sich, daß die gestufte Darstellung lediglich dazu dient, den Aufbau der einzelnen Lagen 13, 14, 15, 16, 17 deutlich erkennbar zu machen. Außerdem können die Lagen 13, 14, 15, 16, 17 aus verschiedenen Materialien, Faserquerschnitten, Fadenfeinheiten etc. aufgebaut sein.

Die Polsterschicht 12 wird zwischen den Polsterfäden 18 von Nadeln - beispielhaft mit 23 bezeichnet - einer Wirkmaschine durchstoßen. Deren oberseitigen Haken - beispielhaft mit 24 bezeichnet - fassen Verbindungsfäden - beispielhaft mit 25 bezeichnet - ein. Die Nadeln 23 werden vertikal so bewegt, daß sie - wie beim Herstellungsprozeß des Preßpolsters 1 gemäß Figur 1 - Maschen - beispielhaft mit 26 bezeichnet - eines Kettengewirkes bilden, wobei die Maschen 26 die gesamte Polsterschicht 12 einfassen und somit die einzelnen Lagen 13, 14, 15, 16, 17 der Polsterschicht fest miteinander verbinden. Auch hier ist ein Teil der Verbindungsfäden 25 oder sind alle Verbindungsfäden 25 als Wärmeleitfäden ausgebildet, die einen Metallanteil enthalten oder aus ihm bestehen. Trotz der Dicke der Polsterschicht 12 wird hierdurch eine gute Wärmeleitung von Unterseite zu Oberseite bzw. umgekehrt gewährleistet.

Die Figuren 3 und 4 zeigen einen besonderen Polsterfaden 27 für die Verwendung beispielsweise in den Preßpolstern 1, 11. Dieser Polsterfaden 27 weist einen Seelenfaden 28 auf, der als verseilter Metalldraht ausgebildet ist. Der Seelenfaden 28 ist von einem Silikonelastomermantel 29 umgeben. An der Außenseite ist der Silikonelastomermantel 29 von Metalldrähten - beispielhaft mit 30 bezeichnet - umflochten, was dem Polsterfaden 27 eine hohe Wärmeleitfähigkeit gibt. Statt der umflochtenen Metalldrähte 30 können auch gewickelte oder verseilte Metalldrähte - wie in dem DE-U-297 21 494 vorgeschlagen - verwendet werden.

Die Figuren 5 bis 7 zeigen umrißartig Querschnitte von Preßpolstern 31, 32, 33, welche Randverdickungen 34, 35, 36, 37, 38, 39 aufweisen. Die Randverdickungen 34, 35, 36, 37, 38, 39 können durch den Einsatz zusätzlicher Polsterfäden, Erhöhung der Maschendichte, Einbringen von Bändern oder durch Schlaufenbildung erzeugt werden. Bei dem Ausführungsbeispiel gemäß Figur 7 werden die Randverdickungen 38, 39 durch Umschlagen an den Rändern gebildet.

## Patentansprüche

1. Preßpolster (1, 11, 31, 32, 33) mit einer in dessen Dickenrichtung elastischen Polsterung (2, 12) und mit zwischen den Oberflächen der Polsterung hin- und hergehenden verbindungsfäden (8, 25), die wenigstens teilweise als Wärmeleitfäden ausgebildet sind, **dadurch gekennzeichnet, daß** Verbindungsfäden (8, 25) vorgesehen sind, die Nahtverlauf haben oder zwischen den Oberflächen Maschen bilden, wobei die naht- oder maschenbildenden Verbindungsfäden (8, 25) wenigstens teilweise als Wärmeleitfäden ausgebildet sind, die die Wärmeleitfähigkeit des Preßpolsters in Dickenrichtung verbessern.

2. Preßpolster nach Anspruch 1, **dadurch gekennzeichnet, daß** die Polsterung als einlagige Polsterschicht ausgebildet ist.

3. Preßpolster nach Anspruch 1, **dadurch gekennzeichnet, daß** die Polsterung als mehrlagige Polsterschicht (12) ausgebildet ist und wenigstens eine der Lagen (13, 14, 15, 16, 17) in Dickenrichtung elastisch ausgebildet ist, wobei alle Lagen (13, 14, 15, 16, 17) durch Verbindungsfäden (25) miteinander verbunden sind.

4. Preßpolster nach Anspruch 2 oder 3, **dadurch gekennzeichnet, daß** die elastische Lage (2) bzw. wenigstens eine der elastischen Lagen (13, 15, 16, 17) in Dikkenrichtung elastische Polsterfäden (3, 18, 20, 21, 22, 27) aufweisen oder daraus bestehen.

5. Preßpolster nach Anspruch 4, **dadurch gekennzeichnet, daß** die Polsterfäden (3, 18, 20, 21, 22, 27) in der jeweiligen Lage (13, 15, 16, 17) nebeneinander in derselben Richtung verlaufen.

6. Preßpolster nach Anspruch 4 oder 5, **dadurch gekennzeichnet, daß** die Polsterfäden (3, 18, 20, 21, 22, 27) als Gelege vorliegen oder Teil eines Gewebes oder einer Maschenware sind.

7. Preßpolster nach einem der Ansprüche 4 bis 6, **dadurch gekennzeichnet, daß** mehrere Lagen (13, 14, 15, 16, 17) mit Polsterfäden (18, 20, 21, 22) übereinander angeordnet sind, wobei die Polsterfäden (18, 20, 21, 22) der Lagen (13, 15, 16, 17) sich in unterschiedlichen Richtungen erstrecken.

8. Preßpolster nach einem der Ansprüche 4 bis 7, **dadurch gekennzeichnet, daß** die Polsterfäden (3, 18, 20, 21, 22, 27) jeweils einen Seelenfaden (4, 28) aufweisen, der von einem gummielastischen Fadenmantel (5, 29) umgeben ist.

9. Preßpolster nach Anspruch 8, **dadurch gekennzeichnet, daß** der Fadenmantel (5, 29) aus einem Silikonelastomer oder Fluorsilikonelastomer besteht.

10. Preßpolster nach Anspruch 8 oder 9, **dadurch gekennzeichnet, daß** die Polsterfäden (27) zumindest teilweise von Metalldraht (30) umgeben sind.

11. Preßpolster nach einem der Ansprüche 2 bis 10, **dadurch gekennzeichnet, daß** die elastische Lage bzw. wenigstens eine der elastischen Lagen (14) aus einer Elastomerfolie (19) besteht.

12. Preßpolster nach Anspruch 11, **dadurch gekennzeichnet, daß** die Elastomerfolie (19) bzw. wenigstens eine der Elastomerfolien die Wärmeleitfähigkeit verbessernde Elemente enthält.

13. Preßpolster nach Anspruch 11 oder 12, **dadurch gekennzeichnet, daß** die Elastomerfolie einen textilen Träger enthält.

14. Preßpolster nach einem der Ansprüche 2 bis 13, **dadurch gekennzeichnet, daß** die elastische Lage bzw. wenigstens eine der elastischen Lagen als ein elastisches Gewebe, Gewirke, Gestricke oder als ein Faservlies oder eine Kombinatin davon ausgebildet ist.

15. Preßpolster nach einem der Ansprüche 2 bis 14, **dadurch gekennzeichnet, daß** die elastische Lage bzw. wenigstens eine der elastischen Lagen aus Schaumstoff besteht.

16. Preßpolster nach Anspruch 15, **dadurch gekennzeichnet, daß** der Schaumstoff die Wärmeleitfähigkeit verbessernde Elemente enthält.

17. Preßpolster nach wenigstens Anspruch 3, **dadurch gekennzeichnet, daß** wenigtens eine der Lagen inkompressibel ausgebildet ist.

18. Preßpolster nach Anspruch 17, **dadurch gekennzeichnet, daß** die inkompressible Lage bzw. wenigstens eine der inkompressiblen Lagen als Metallfolie ausgebildet ist oder aus Folienbändchen besteht.

19. Preßpolster nach einem der Ansprüche 1 bis 18, **dadurch gekennzeichnet, daß** die Wärmeleitfäden (8, 25) aus Metallfäden oder -fasern bestehen oder solche durchgehend enthalten.

20. Preßpolster nach einem der Ansprüche 1 bis 19, **dadurch gekennzeichnet, daß** die Wärmeleitfäden (8, 25) als Kunststoffäden mit einem Anteil Metall ausgebildet sind.

21. Preßpolster nach einem der Ansprüche 1 bis 20, **dadurch gekennzeichnet, daß** sich Wärmeleitfäden und Nicht-Wäremeleitfäden als Verbindungsfäden (8, 25) abwechseln, wobei die Nicht-Wärmeleitfäden eine höhere Zugfestigkeit haben als die Wärmeleitfäden.

22. Preßpolster nach einem der Ansprüche 1 bis 21, **dadurch gekennzeichnet, daß** das Preßpolster (31, 32, 33) Randverdickungen (34, 35, 36, 37, 38, 39) aufweist.

## Claims

1. Pressing cushion (1, 11, 31, 32, 33) having a cushioning (2, 12) that is elastic in its thickness direction and having connecting threads (8, 25), going back and forth between the surfaces of the cushioning, that are configured at least partially as thermally conductive threads, **characterized in that** connecting threads (8, 25) are provided which have a sewn profile or form stitches between the surfaces, wherein the sewn- or stitch-forming connecting threads (8, 25) are configured at least partially as thermally conductive threads improving thermal conductivity of the pressing cushion in thickness direction.

2. Pressing cushion as defined in Claim 1, **characterized in that** the cushioning is configured as a single-ply cushioning layer.

3. Pressing cushion as defined in Claim 1, **characterized in that** the cushioning is configured as a multiple-ply cushioning layer (12), and at least one of the plies (13, 14, 15, 16, 17) is configured elastically in the thickness direction, all of the plies (13, 14, 15, 16, 17) being interconnected by connecting threads (25).

4. Pressing cushion as defined in Claim 2 or 3, **characterized in that** the elastic ply (2) or at least one of the elastic plies (13, 14, 15, 16, 17) has or is made of cushion threads (3, 18, 20, 21, 22, 27) that are elastic in the thickness direction.

5. Pressing cushion as defined in Claim 4, **characterized in that** the cushion threads (3, 18, 20, 21, 22, 27) extend next to one another in the same direction in the particular ply (13, 15, 16, 17).

6. Pressing cushion as defined in Claim 4 or 5, **characterized in that** the cushion threads (3, 18, 20, 21, 22, 27) are present as a layer or are part of a fabric or of a knitted material.

7. Pressing cushion as defined in one of Claims 4 through 6, **characterized in that** multiple plies (13, 14, 15, 16, 17) having cushion threads (18, 20, 21, 22) are arranged one on top of another, the cushion threads (18, 20, 21, 22) of the plies (13, 15, 16, 17) extending in different directions.

8. Pressing cushion as defined in one of Claims 5 through 7, **characterized in that** the cushion threads (3, 18, 20, 21, 22, 27) each have a core thread (4, 28) that is surrounded by an elastomeric thread sheath (5, 29).

9. Pressing cushion as defined in Claim 8, **characterized in that** the thread sheath (5, 29) is made of a silicone elastomer or fluorosilicone elastomer.

10. Pressing cushion as defined in Claim 8 or 9, **characterized in that** the cushion threads (27) are at least partially surrounded by metal wire (30).

11. Pressing cushion as defined in one of Claims 2 through 10, **characterized in that** the elastic ply or at least one of the elastic plies (14) is made of an elastomer film (19).

12. Pressing cushion as defined in Claim 11, **characterized in that** the elastomer film (19) or at least one of the elastomer films contains the elements that improve thermal conductivity.

13. Pressing cushion as defined in Claim 11 or 12, **characterized in that** the elastomer film contains a textile support.

14. Pressing cushion as defined in one of Claims 2 through 13, **characterized in that** the elastic ply or at least one of the elastic plies is configured as an elastic fabric or knitted fabric, or as a fiber batt, or a combination thereof.

15. Pressing cushion as defined in one of Claims 2 through 14, **characterized in that** the elastic ply or at least one of the elastic plies is made of foamed material.

16. Pressing cushion as defined in Claim 15, **characterized in that** the foamed material contains the elements that improve thermal conductivity.

17. Pressing cushion as defined at least in Claim 3, **characterized in that** at least one of the plies is of incompressible configuration.

18. Pressing cushion as defined in Claim 17, **characterized in that** the incompressible ply or at least one of the incompressible plies is configured as metal foil or is made of foil strips.

19. Pressing cushion as defined in one of Claims 1 through 18, **characterized in that** the thermally conductive threads (8, 25) are made of metal threads or fibers or continuously contain them.

20. Pressing cushion as defined in one of Claims 1 through 19, **characterized in that** the thermally conductive threads (8, 25) are configured as plastic threads with a metal content.

21. Pressing cushion as defined in one of Claims 1 through 20, **characterized in that** thermally conductive threads and thermally non-conductive threads alternate as connecting threads (8, 25), the thermally non-conductive threads having a greater tensile strength than the thermally conductive threads.

22. Pressing cushion as defined in one of Claims 1 through 21, **characterized in that** the pressing cushion (31, 32, 33) has edge thickenings (34, 35, 36, 37, 38, 39).

## Revendications

1. Coussinet (1, 11, 31, 32, 33) destiné à une presse, comprenant un rembourrage (2, 12) élastique dans la direction de l'épaisseur dudit coussinet, et des fils de solidarisation (8, 25) qui accomplissent un va-et-vient entre les surfaces du rembourrage et sont réalisés, au moins en partie, sous la forme de fils thermoconducteurs, **caractérisé par** la présence de fils de solidarisation (8, 25) présentant l'allure d'une couture ou formant des mailles entre les surfaces, sachant que les fils de solidarisation (8, 25) formant une couture ou des mailles sont réalisés, au moins en partie, sous la forme de fils thermoconducteurs qui améliorent la conductivité thermique du coussinet de presse dans la direction de l'épaisseur.

2. Coussinet de presse selon la revendication 1, **caractérisé par le fait que** le rembourrage est réalisé sous la forme d'une couche de rembourrage à une seule strate.

3. Coussinet de presse selon la revendication 1, **caractérisé par le fait que** le rembourrage est réalisé sous la forme d'une couche de rembourrage (12) à plusieurs strates, et au moins l'une desdites strates (13, 14, 15, 16, 17) est de réalisation élastique dans la direction de l'épaisseur, toutes les strates (13, 14, 15, 16, 17) étant reliées les unes aux autres par l'intermédiaire de fils de solidarisation (25).

4. Coussinet de presse selon la revendication 2 ou 3, **caractérisé par le fait que** la strate élastique (2) ou, respectivement, au moins l'une des strates élastiques (13, 15, 16, 17) comporte des fils de rembourrage (3, 18, 20, 21, 22, 27) élastiques dans la direction de l'épaisseur, ou est constituée desdits fils.

5. Coussinet de presse selon la revendication 4, **caractérisé par le fait que** les fils de rembourrage (3, 18, 20, 21, 22, 27) s'étendent, dans la strate considérée (13, 15, 16, 17), en juxtaposition dans la même direction.

6. Coussinet de presse selon la revendication 4 ou 5, **caractérisé par le fait que** les fils de rembourrage (3, 18, 20, 21, 22, 27) revêtent la forme d'une structure stratifiée, ou font partie d'un tissu ou d'une structure maillée.

7. Coussinet de presse selon l'une des revendications 4 à 6, **caractérisé par le fait que** plusieurs strates (13, 14, 15, 16, 17) sont placées en superposition avec des fils de rembourrage (18, 20, 21, 22), les fils de rembourrage (18, 20, 21, 22) desdites strates (13, 15, 16, 17) s'étendant dans des directions différentes.

8. Coussinet de presse selon l'une des revendications 4 à 7, **caractérisé par le fait que** les fils de rembourrage (3, 18, 20, 21, 22, 27) sont respectivement munis d'un fil de noyau (4, 28) entouré d'une enveloppe (5, 29) douée de l'élasticité du caoutchouc.

9. Coussinet de presse selon la revendication 8, **caractérisé par le fait que** l'enveloppe (5, 29) des fils est constituée d'un élastomère siliconé ou d'un élastomère à silicone fluoré.

10. Coussinet de presse selon la revendication 8 ou 9, **caractérisé par le fait que** les fils de rembourrage (27) sont au moins partiellement entourés de fil métallique (30).

11. Coussinet de presse selon l'une des revendications 2 à 10, **caractérisé par le fait que** la strate élastique ou, respectivement, au moins l'une (14) des strates élastiques est constituée d'un feuil d'élastomère (19).

12. Coussinet de presse selon la revendication 11, **caractérisé par le fait que** le feuil d'élastomère (19) ou, respectivement, au moins l'un des feuils d'élastomère renferme des éléments améliorant la conductivité thermique.

13. Coussinet de presse selon la revendication 11 ou 12, **caractérisé par le fait que** le feuil d'élastomère contient un support textile.

14. Coussinet de presse selon l'une des revendications 2 à 13, **caractérisé par le fait que** la strate élastique ou, respectivement, au moins l'une des strates élastiques est réalisée sous la forme d'un tissu, d'un tricot ou d'un maillé élastique, d'une carde fibreuse, ou d'une combinaison de ces derniers.

15. Coussinet de presse selon l'une des revendications 2 à 14, **caractérisé par le fait que** la strate élastique ou, respectivement, au moins l'une des strates élastiques est constituée d'une mousse.

16. Coussinet de presse selon la revendication 15, **caractérisé par le fait que** la mousse renferme des éléments améliorant la conductivité thermique.

17. Coussinet de presse selon au moins la revendication 3, **caractérisé par le fait qu'**au moins l'une des strates est de réalisation incompressible.

18. Coussinet de presse selon la revendication 17, **caractérisé par le fait que** la strate incompressible ou, respectivement, au moins l'une des strates incompressibles est réalisée sous la forme d'un feuil métallique, ou est constituée de rubans de feuil.

19. Coussinet de presse selon l'une des revendications 1 à 18, **caractérisé par le fait que** les fils thermoconducteurs (8, 25) consistent en des fils ou des fibres métalliques, ou bien renferment ces derniers de manière continue.

20. Coussinet de presse selon l'une des revendications 1 à 19, **caractérisé par le fait que** les fils thermoconducteurs (8, 25) sont réalisés sous la forme de fils en matière plastique renfermant une part métallique.

21. Coussinet de presse selon l'une des revendications 1 à 20, **caractérisé par le fait que** des fils thermoconducteurs et des fils non thermoconducteurs alternent, en tant que fils de solidarisation (8, 25), les fils non thermoconducteurs possédant une plus grande résistance à la traction que les fils thermoconducteurs.

22. Coussinet de presse selon l'une des revendications 1 à 21, **caractérisé par le fait que** ledit coussinet de presse (31, 32, 33) comporte des renflements marginaux (34, 35, 36, 37, 38, 39).
